# NOUVEAU FASCICULE DE BREVET EUROPEEN

(11) **EP 1 637 415 B2**
(45) Date de publication et mention de la décision concernant l'opposition: **09.01.2019**
(45) Mention de la délivrance du brevet: 04.11.2015
(21) Numéro de dépôt: 04104459.5
(22) Date de dépôt: 15.09.2004
(51) Int. Cl.: B60R 25/02, B60R 25/021, B60R 25/0215

(54) **Dispositif éléctrique pour le blocage/deblocage d'une colonne de direction**
Elektrische Vorrichtung für das Verriegeln/Entriegeln einer Lenksäule
Electrical device for locking/unlocking a steering column

(43) Date de publication de la demande: 22.03.2006
(73) Titulaire: U-Shin Deutschland Zugangssysteme GmbH, 85253 Erdweg (DE)
(72) Inventeur: Otto, Andreas c/o Valeo Séc.Habitacle, 94042 Creteil Cédex (FR)
(74) Mandataire: Prinz & Partner mbB

(56) Documents cités:
- EP-A- 1 232 921
- EP-A2- 1 029 755
- WO-A1-99/14085
- WO-A1-2005/019004
- DE-A1- 4 219 846
- DE-A1- 10 022 830
- DE-A1- 19 906 267
- DE-B3- 10 247 802
- DE-C1- 3 739 172
- DE-C1- 10 121 919
- DE-C1- 19 653 860
- Huf Lenkanschloss ZSB

## Description

L'invention concerne un dispositif électrique pour le blocage/déblocage d'une colonne de direction dans des véhicules automobiles. L'invention s'applique en particulier à la fixation, ou au verrouillage, du pêne dans la position de blocage de la colonne de direction.

Les dispositifs de blocage de colonne de direction ont pour but principal la fixation de la colonne de direction dans une position donnée lorsque notamment le moteur du véhicule s'arrête ou que la clé de contact a été retirée du barillet de démarrage. Dans ce cas, le pêne du dispositif de blocage vient bloquer la colonne de direction, généralement en faisant saillie dans une partie de ladite colonne, de manière à empêcher toute tentative de déplacement du véhicule, en particulier pour son vol.

D'autre part, lorsque le véhicule est démarré, et à fortiori lorsqu'il roule, il est impératif que le dispositif de blocage reste passif, c'est-à-dire qu'il ne vienne pas bloquer la colonne de direction, pour des raisons évidentes de sécurité.

Ainsi, il est impératif que les deux positions de blocage et de déblocage de la colonne de direction par le pêne, ou analogue, soient inviolables, tant pour lutter contre le vol du véhicule que pour éviter tout risque d'accident.

A l'heure actuelle, il existe sur le marché des dispositifs électriques de blocage/déblocage complexes disposant d'actionneurs électriques dédiés et/ou d'appareils distincts pour assurer le verrouillage du pêne dans ses deux positions de blocage et de déblocage de la colonne de direction. Ces systèmes sont coûteux, volumineux et sujets à des dysfonctionnements du fait même de leur complexité et du nombre d'éléments nécessaires à leur actionnement.

En outre le document EP 1 232 921 propose un verrou électrique de colonne de direction dans lequel est prévu un moyen automatique de blocage du verrou en position de non-verrouillage de la colonne de direction.

La présente invention entend remédier aux inconvénients des dispositifs de l'art antérieur en proposant une solution peu coûteuse, peu volumineuse, simple et fiable pour assurer automatiquement le verrouillage du pêne dans une position extrême dans des dispositifs électriques de blocage/déblocage de la colonne de direction.

L'invention a pour objet un dispositif électrique pour le blocage/déblocage d'une colonne de direction tel que défini dans la revendication 1.

On entend par le terme automatique le fait que le verrouillage du pêne est réalisé obligatoirement, ou inéluctablement, lors ou à l'issue du déplacement du pêne depuis une de ses positions extrêmes, de blocage ou de déblocage de la colonne de direction, vers l'autre position.

Selon l'invention telle que definie dans la revendication 1, les moyens mécaniques assurent le verrouillage du pêne dans ses deux positions de blocage et de déblocage de la colonne de direction.

Selon l'invention telle que definie dans la revendication 1, les moyens mécaniques consistent en un moyen mécanique unique, par exemple en un levier pivotant disposant d'au moins une protubérance.

L'invention est décrite ci-après plus en détail, à l'aide de figures ne représentant que des modes préférés de l'invention.
- la figure 1 est une vue schématique d'un premier mode de réalisation d'un dispositif selon l'invention,
- la figure 2 est une vue schématique en coupe d'un second mode de réalisation d'un dispositif selon l'invention lorsque le pêne est en position de blocage de la colonne de direction.
- la figure 3 est une vue en coupe du dispositif représenté sur la figure 2 lorsque le pêne est en train de remonter de sa position de blocage de la colonne de direction vers sa position de déblocage, ou de libération, de la colonne de direction.
- la figure 4 est une vue en coupe du dispositif représenté sur la figure 2 lorsque le pêne est dans sa position de déblocage de la colonne de direction.

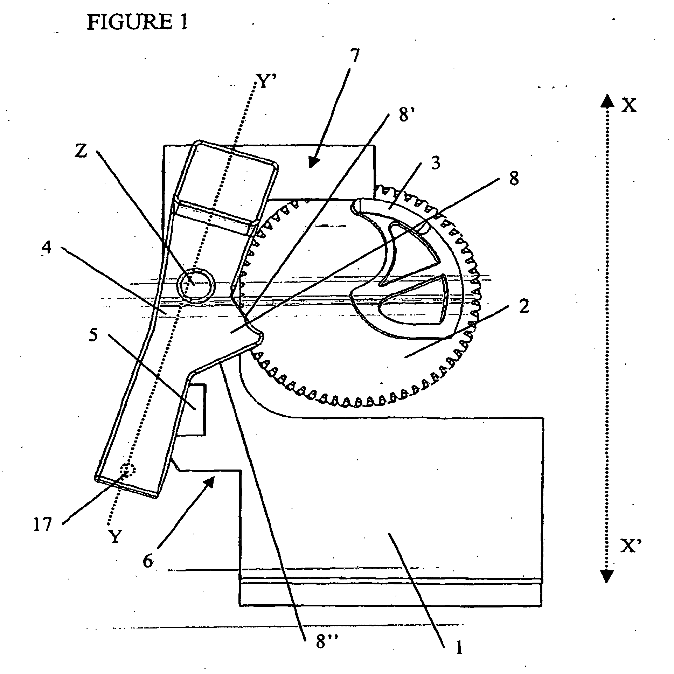

La figure 1 illustre le premier mode de réalisation du dispositif selon l'invention. Dans ce mode de réalisation, le dispositif comprend un pêne 1, une roue rotative 2 portant une came 3, solidaire de la roue 2, mis en mouvement par un moteur, de sorte que le dispositif de blocage/déblocage de la colonne de direction est un dispositif électrique, et un levier pivotant 4 disposant d'un ressort de rappel, non représenté sur les figures. Les éléments 2 et 3 forment ici l'actionneur du dispositif selon l'invention. On doit ici rappeler que les dispositifs électriques de blocage/déblocage d'une colonne de direction consistent en des dispositifs où l'actionnement du pêne, c'est-à-dire son déplacement, est réalisé électriquement. Ainsi, l'actionneur 2, 3 dans ce type de dispositif est classiquement commandé par un moteur électrique. Ce type de dispositifs électriques s'oppose aux dispositifs mécaniques de blocage/déblocage d'une colonne de direction dans lesquels l'actionnement du pêne est réalisé de manière mécanique, par exemple grâce à des ressorts.

Les fonctions du pêne 1 et de la colonne de direction, non représentée sur les figures annexées, ne seront pas développées plus avant car les fonctions respectives de ces deux éléments sont classiques et bien connues de l'homme du métier ; l'invention ne visant pas à modifier ces éléments. Ainsi, dans le premier mode de réalisation de l'invention, les moyens mécaniques consistent en un levier pivotant 4 disposant d'au moins une patte, ou protubérance 17. Ainsi, les moyens mécaniques aptes à assurer le verrouillage du pêne 1 dans ses deux positions de blocage et de déblocage de la colonne de direction consistent en une pièce unique 4, 17.

Le pêne 1 est autorisé à se déplacer suivant un axe longitudinal X'X grâce à l'action de la came 3. Le pêne 1 comprend un logement 5 ainsi qu'un retrait 6 ; le logement 5 étant situé au-dessus par rapport au retrait 6. Ce logement 5 et ce retrait 6 sont destinés à accueillir la patte, ou protubérance, du levier pivotant 4 pour le verrouillage du pêne 1 respectivement dans ses positions de blocage et de déblocage de la colonne de direction. Bien entendu, on pourra prévoir de réaliser deux logements 5 ou deux retraits 6 ou bien d'inverser l'emplacement du logement 5 et du retrait 6 par rapport à la représentation de la figure 1.

Sur la figure 1, le pêne 1 est en position haute, c'est-à-dire en position de déblocage, ou de libération, de la colonne de direction. Le pêne 1 dispose d'une partie supérieure en L 7 dont l'extrémité s'étend perpendiculairement à l'axe longitudinal X'X. Cette extrémité 7 repose sur la came 3 portée par la roue 2.

Le levier pivotant 4 est fixé par exemple au boîtier ou à une armature, non représentés sur les figures, logeant ou encadrant le pêne 1, par exemple par rivetage ou vissage permettant une rotation par rapport à un axe Z. Le levier pivotant 4 comprend d'une part une aile 8, de préférence en forme de V, disposant de deux sections inclinées 8' et 8", d'un angle compris sensiblement entre 10° et 70°, et d'une patte, ou protubérance, non représentée sur les figures annexées. Cette patte, qui s'étend perpendiculairement à l'axe longitudinal Y'Y du levier 4 et à l'axe X'X de déplacement du pêne 1, est destinée à venir en prise tantôt avec le logement 5 du pêne 1 lorsque ce dernier 1 est en position basse, ou position de blocage de la colonne de direction, tantôt avec le retrait 6 du pêne 1 lorsque ce dernier 1 est en position haute, ou position de déblocage, ou de libération, de la colonne de direction. Le pêne 1 étant initialement en position de déblocage de la colonne de direction, la patte du levier 4 se trouve située sous ou dans le retrait 6 du pêne 1 de manière à bloquer ce dernier 1 dans cette position.

Lorsque la roue 2 tourne dans le sens contraire des aiguilles d'une montre par exemple sous l'action d'un moteur disposant d'un arbre de transmission et d'une vis sans fin, non représentés sur la figure annexée, la came 3, solidaire de la roue 2, tourne également dans ce sens. L'actionneur du dispositif électrique de blocage/déblocage de la colonne de direction consiste ici en la roue 2 disposant d'au moins une came 3 ; ladite came 3 coopérant avec l'aile 8 du levier pivotant 4 pour réaliser le pivotement dudit levier lors du déplacement du pêne 1.

Ainsi, lorsque la came 3 tourne, depuis sa position illustrée sur la figure 1, dans le sens contraire des aiguilles d'une montre, la came 3 descend, ou se déplace dans le sens de la flèche X', et le pêne 1, supporté par la came 3, se déplace également comme la came 3. La came 3 arrive au contact du levier pivotant 4 puis de la première section 8' de l'aile 8 dudit levier pivotant 4 et pousse ce dernier 4 en continuant sa rotation de sorte que le levier pivotant 4 s'écarte du pêne 1 en pivotant dans le sens des aiguilles d'une montre. Lorsque le levier pivotant 4 est suffisamment écarté, comme cela est représenté pour le levier 4 sur la figure 1, la came 3 ainsi que le pêne 1 peuvent se déplacer vers la position de blocage de la colonne de direction puisque ce dernier 1 n'est plus retenu par la patte 17 du levier pivotant 4 coopérant avec le retrait 6. La came 3 poursuit sa rotation et s'éloigne du levier pivotant 4 de sorte que ce dernier 4 pivote à nouveau dans le sens contraire des aiguilles d'une montre, en direction du pêne 1, sous l'action du ressort de rappel, non représenté sur la figure 1. De cette façon, la patte du levier pivotant 4 pénètre le logement 5 présent sur le pêne 1 et, lorsque le pêne 1 est parvenu dans sa position stable de blocage de la colonne de direction, la patte du levier pivotant 4 vient en butée contre le pêne 1 de sorte que ce dernier 1 ne peut plus remonter, c'est-à-dire revenir vers sa position de déblocage de la colonne de direction.

Lors de la remontée du pêne 1, c'est-à-dire lors de son retour vers sa position de libération de la colonne de direction commandé par le moteur via la roue 2, la came 3 va tourner cette fois-ci dans le sens des aiguilles d'une montre en réalisant le chemin inverse à celui emprunté pour la descente, ou déplacement du pêne 1 vers sa position de blocage. Ainsi, le levier pivotant 4 sera à nouveau écarté du pêne 1 de la même manière que précédemment par action de la came 3 sur la seconde section inclinée 8" de l'aile 8 afin que la patte du levier pivotant 4 s'écarte du logement 5 du pêne 1 au retrait 6 du pêne 1.

Grâce au système de l'invention, le verrouillage du pêne 1 dans ses deux positions extrêmes, à savoir sa position de blocage de la colonne de direction et sa position de libération de la colonne de direction, est obtenu non seulement de manière mécanique mais également de façon automatique lors du déplacement du pêne 1 d'une position à une autre grâce à un seul et même moyen 4.

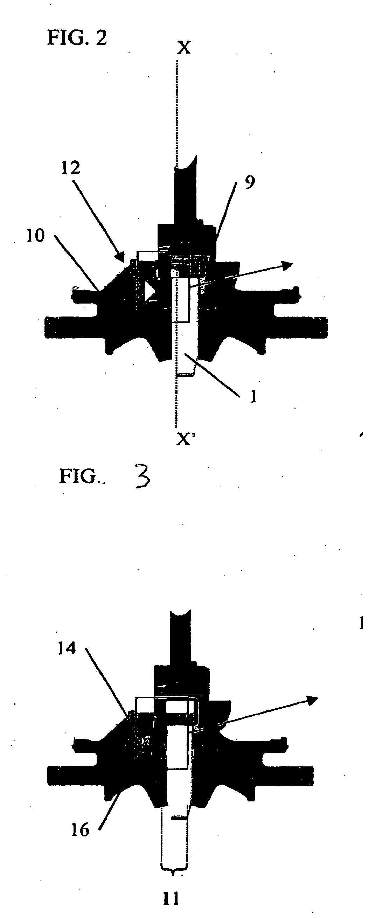

Les figures 2 à 4 illustrent un second mode de réalisation du dispositif de l'invention. Outre les éléments déjà divulgués dans le premier mode de réalisation, le dispositif comprend ici un moyen porteur 9 solidaire du pêne

1 et portant ce dernier 1 pour l'amener en position de blocage ou de déblocage de la colonne de direction. Ces figures montrent également un cadre 10 dans ou sur lequel sont montés les moyens mécaniques assurant le verrouillage du pêne 1 en position de blocage de la colonne de direction. Ce cadre 10 comprend également l'espace de guidage 11 nécessaire au déplacement longitudinal du pêne 1. Le moyen porteur 9 et le cadre 10 sont des éléments classiques de tels dispositifs, bien connus de l'homme du métier, et l'invention ne vise pas à les modifier.

Par ailleurs, il n'est pas représenté, sur les figures 2 à 4, une partie des moyens mécaniques de l'invention aptes à verrouiller la position haute du pêne 1, c'est-à-dire la position de libération de la colonne de direction. Cette partie des moyens mécaniques propres à verrouiller le pêne en position de déblocage de la colonne de direction consistent en un levier pivotant lié à un ressort qui le contraint à basculer dans un logement réalisé à cet effet dans le pêne pour verrouiller ce dernier dans sa position de déblocage de la colonne de direction. Ce levier est ramené dans sa position initiale, hors du logement du pêne, par l'action d'un moyen mécanique consistant en un bras de commande actionné par l'actionneur électrique prévu pour déplacer le pêne. Cet exemple de réalisation de la partie des moyens mécaniques aptes à verrouiller le pêne en position de déblocage de la colonne de direction est divulgué dans le document EP 1029755, relativement à la réalisation de la figure 2, et ne feront pas l'objet d'une description plus détaillée dans la présente demande. Les moyens mécaniques comprennent ainsi un levier pivotant coopérant avec le pêne pour le verrouiller dans la position de déblocage de la colonne de direction.

Dans la suite, nous allons nous décrire la partie des moyens mécaniques, représentée sur les figures 2 à 4, aptes à assurer le verrouillage du pêne 1 en position de blocage de la colonne de direction. Cette partie des moyens mécaniques sera dans la suite généralement nommée bloc mécanique 12.

Le bloc mécanique 12 est constitué essentiellement de deux pattes axiales 14 et 15, c'est-à-dire s'étendant perpendiculairement à l'axe longitudinal X'X de déplacement du pêne 1, aptes à venir en saillie d'un élément 13 formant support et guidage desdites pattes 14, 15. Ces deux pattes, l'une supérieure 15 et l'autre inférieure 14, sont solidaires l'une de l'autre de sorte que les deux pattes 14, 15 sont ensembles protubérantes hors de l'élément 13 d'une même longueur et viennent également ensemble en retrait vers ledit élément 13 d'une même longueur, c'est-à-dire que les deux pattes 14, 15 présentent sensiblement la même longueur de débattement.

La figure 2 représente le dispositif de l'invention lorsque le pêne 1 est en position de blocage de la colonne de direction, autrement dit en position basse, les deux pattes 14, 15 étant alors en position déployée hors de l'élément 13, ou en position active, de manière à verrouiller la position du pêne 1. Dans ce cas, la patte supérieure 15 repose sur la face supérieure du pêne 1 de sorte que ce dernier 1 ne peut remonter et reste donc verrouillé dans sa position de blocage de la colonne de direction. Par ailleurs, la patte inférieure 14, dont la partie en saillie hors de l'élément 13 présente une forme de triangle ou de V avec la pointe dirigée perpendiculairement à l'axe longitudinal X'X du pêne 1, est en contact avec une protubérance 16 du moyen porteur 9 et bloque ce dernier 9. Ainsi, dans cette position, le moyen porteur 9 et le pêne 1 sont verrouillés dans leur position respectivement par la patte inférieure 14 et par la patte supérieure 15.

Comme représenté sur la figure 3, lorsque le pêne 1 remonte sous l'action du seul moteur électrique du dispositif agissant sur le moyen porteur 9, de sa position de blocage vers sa position de déblocage de la colonne de direction, la protubérance 16 appuie sur la première section inclinée de la patte inférieure 14 de manière à pousser ladite patte 14 en arrière vers son logement dans l'élément 13. On notera que la patte supérieure repose ou s'étend au-dessus de la surface supérieure du pêne avec un certain jeu de sorte que le pêne 1 peut entamer sa remontée et, via la protubérance 16, appuyer sur la patte inférieure 14 qui vient en retrait entraînant en retrait la patte supérieure 15. Lorsque la patte inférieure 14 se déplace en retrait par rapport au pêne 1, elle entraîne la patte supérieure 15 de sorte que cette dernière 15 libère totalement le pêne 1. Le pêne 1 peut alors remonter avec le moyen porteur 9 pour occuper sa position de déblocage, ou de libération, de la colonne de direction.

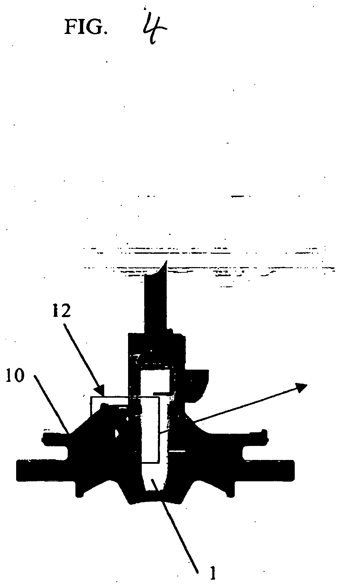

Sur la figure 4 sont visibles les positions en retrait des deux pattes 14, 15 lorsque le pêne 1 est en position de libération de la colonne de direction. La patte supérieure 15 bute sur un des côtés, ou une des faces latérales, du pêne 1 tandis que la patte inférieure 14 est en position de retrait extrême, et seule sa pointe est en saillie hors du logement de l'élément 13 formant support et guidage des pattes 14, 15. Le verrouillage du pêne 1 dans sa position de libération de la colonne de direction est réalisé grâce à une autre partie des moyens mécaniques, non représentés sur les figures annexées, consistant en un levier basculant dans un logement prévu sur le pêne 1, comme indiqué précédemment relativement au document EP 1029755.

Lorsque le pêne 1 descend ou se déplace à nouveau vers sa position de blocage de la colonne de direction, la protubérance 16 du moyen porteur 9 passe devant la patte inférieure 14 et la pousse légèrement en retrait tandis que la patte supérieure 15 glisse sur le côté du pêne 1 puis, sous l'action du retrait de la patte inférieure 14, vient également en retrait hors du contact avec le pêne 1 de manière à ne pas perturber le déplacement de ce dernier 1. Lorsque la protubérance 16 du moyen porteur 9 dépasse le sommet de la patte inférieure 14 et que le pêne 1 est descendu au-delà de la patte supérieure 15, cette dernière 15 peut alors s'étendre dans position d'allongement maximum, sous l'action d'au moins un ressort monté dans l'élément 13 formant support et guidage desdites pattes 14, 15. La patte inférieure 14 sort également de l'élément 13 pour s'étendre axialement et bloquée la protubérance 16 du moyen porteur 9, comme représenté sur la figure 2.

De cette manière, la patte supérieure 15 vient bloquer le pêne 1 en reposant sur sa surface supérieure tandis que la patte inférieure 14 coopère avec la protubérance 16 du moyen porteur 9 de telle sorte que lorsque le pêne 1 passe de sa position de blocage à sa position de déblocage ou de libération de la colonne de direction, ladite protubérance 16 ramène en retrait ladite patte inférieure 14, et par conséquent la patte supérieure 15.

Dans ce deuxième mode de réalisation, le moyen porteur 9, solidaire dudit pêne 1, coopère avec le bloc mécanique 12, et en particulier au moins une partie 14 des susdits moyens mécaniques.

## Revendications

1. Dispositif électrique pour le blocage/déblocage d'une colonne de direction, comprenant un pêne (1) destiné à occuper une position de blocage de la colonne de direction et une position de libération de la colonne de direction, un actionneur (2, 3) mis en mouvement par un moteur commandant le déplacement du pêne (1) dans les deux susdites positions de blocage et de libération,
**caractérisé en ce que**
le dispositif comprend en outre des moyens mécaniques pour assurer le verrouillage automatique du pêne (1) dans sa position de blocage de la colonne de direction,
**en ce que** les moyens mécaniques assurent le verrouillage du pêne (1) dans ses deux positions de blocage et de déblocage de la colonne de direction,
**en ce que** les moyens mécaniques consistent en une pièce unique (4, 17),
**en ce que** les moyens mécaniques consistent en un levier pivotant (4) disposant d'au moins une protubérance (17), et
**en ce que** le pêne (1) comprend deux logement(s) (5) et/ou retrait(s) (6) destinés à accueillir la protubérance (17) du levier pivotant (4) pour le verrouillage du pêne (1) respectivement dans ses positions de blocage/déblocage de la colonne de direction.

2. Dispositif selon la revendication 1, **caractérisé en ce que** l'actionneur consiste en une roue (2) disposant d'au moins une came (3) solidaire de la roue (2); ladite came (3) coopérant avec une aile (8) du levier pivotant (4) pour réaliser le pivotement dudit levier (4) lors du déplacement du pêne (1).

## Patentansprüche

1. Elektrische Vorrichtung zum Sperren/Freigeben einer Lenksäule, mit einem Riegel (1), der dazu bestimmt ist, eine Stellung zum Sperren der Lenksäule und eine Stellung zum Freigeben der Lenksäule einzunehmen, einem motorisch bewegten Aktuator (2, 3), der die Verlagerung des Riegels (1) in die beiden vorstehend genannten Stellungen zum Sperren und Freigeben ausführt,
**dadurch gekennzeichnet, dass**
die Vorrichtung außerdem mechanische Mittel umfasst, um die automatische Verriegelung des Riegels (1) in seiner Stellung zum Sperren der Lenksäule sicherzustellen,
die mechanischen Mittel die Verriegelung des Riegels (1) in seinen beiden Stellungen zum Sperren und Freigeben der Lenksäule sicherstellen,
die mechanischen Mittel aus einem einzigen Bauteil (4, 17) bestehen,
die mechanischen Mittel aus einem Schwenkhebel (4) bestehen, der mindestens einen Vorsprung (17) aufweist,
der Riegel (1) zwei Aufnahmen (5) und/oder Rücksprünge (6) aufweist, die dazu bestimmt sind, den Vorsprung (17) des Schwenkhebels (4) zum Verriegeln des Riegels (1) in seinen Stellungen zum Sperren bzw. Freigeben der Lenksäule aufzunehmen.

2. Vorrichtung nach Anspruch 1 , **dadurch gekennzeichnet, dass** der Aktuator aus einem Rad (2) besteht, das mindestens einen mit dem Rad (2) fest verbundenen Nocken (3) aufweist; wobei der Nocken (3) mit einem Flügel (8) des Schwenkhebels (4) zusammenwirkt, um bei einer Verlagerung des Riegels (1) das Schwenken des Hebels (4) auszuführen.

## Claims

1. Electrical device for locking/unlocking a steering column, comprising a latch bolt (1) intended to occupy a locked position of the steering column and a released position of the steering column, with an actuator (2, 3) set into motion by a motor controlling the movement of the latch bolt (1) in the two aforementioned positions of locking and releasing,
**characterized in that**
the device further comprises mechanical means for providing the automatic locking of the latch bolt (1) in the locked position of the steering column,
**in that** the mechanical means provide for the locking of the latch bolt (1) in its two positions of locking and unlocking of the steering column,
**in that** the mechanical means consist of a single part (4, 17),
**in that** the mechanical means consist of a pivoting lever (4) having at least one protuberance (17),
**in that** the latch bolt (1) comprises two housing(s) (5) and/or recess(es) (6) intended to receive the protuberance (17) of the pivoting lever (4) in order to lock the latch bolt (1) respectively in its locked/unlocked positions of the steering column.

2. Device according to claim 1, **characterized in that** the actuator consists of a wheel (2) having at least one cam (3) integral with the wheel (2); said cam (3) engaging with a wing (8) of the pivoting lever (4) in order to perform the pivoting of said lever (4) during the movement of the latch bolt (1).
